# EUROPEAN PATENT SPECIFICATION

(11) **EP 2 403 813 B1**
(45) Date of publication and mention of the grant of the patent: **10.01.2018**
(21) Application number: 10709761.0
(22) Date of filing: 02.03.2010
(51) Int. Cl.: C03C 3/091, C03C 3/093, C03C 4/02, C03C 12/00

(54) **COLOURED GLASS FLAKES**
GEFÄRBTE GLASPLÄTTCHEN
FLOCONS DE VERRE COLORÉS

(30) Priority: 02.03.2009 GB 0903460
(43) Date of publication of application: 11.01.2012
(73) Proprietor: Watkinson, Charles, Goole DN14 0BE (GB)
(72) Inventor: Watkinson, Charles, Great Heck, Goole DN14 0BE (GB); Golden, Emma, Leeds LS7 3RS (GB)
(74) Representative: HGF Limited
(86) International application number: PCT/GB2010/000376
(87) International publication number: WO 2010/100416

(56) References cited:
- EP-A1- 1 602 632
- JP-A- 9 286 633
- JP-A- H0 340 938
- JP-A- 57 012 053
- JP-A- 57 047 366
- JP-A- 57 168 963
- JP-A- 58 160 375
- US-A1- 2008 090 034

## Description

### Field of the invention

This invention relates to powdered glass comprising small particles or flakes of glass, hereinafter referred to as glass flake (GLASSFLAKE is a registered trade mark of Corrocoat Ltd).

### Background to the Invention

A method of producing glass flakes is known which makes use of a spinning cup to produce a flat film of molten glass emanating radially from the rim of a rotating cup. The film is fed between two plates, forming an annular venturi and is super-cooled with forced air. The film is broken up due to the high velocity air stream and the drag (frictional resistance) imparted by it. Such a method and apparatus to perform it is the subject of EP 0 289 240.

The parameters involved in the successful production of a flat glass flake of even thickness, according to the method described in EP 0 289 240 are varied and complex. They have been found to include the following:-
- glass composition, melt temperature and viscosity
- temperature of glass in the melt tank
- mass flow of glass leaving the tank and entering the cup
- temperature of the glass entering the cup
- distance between the outlet of the glass tank and entry to the cup
- diameter and depth of the cup
- heat dissipation properties of the cup
- rotational speed of the cup
- distance between the rim of the cup and entry to the radial venturi
- distance between the plates forming the radial venturi
- diameter of the venturi plates
- volume and pressure of air being drawn between the venturi plates
- temperature of the air flowing between the venturi plates
- diameter and construction of the cyclone collector

These parameters can all be varied with the result that the glass flakes either are or are not produced. Flakes, if produced, may be flat or wavy. The flakes may have a substantial variation in thickness or be very consistent in thickness. The flakes may be large or small in cross-section and/or thickness.

Using the said method and with appropriate control of the above mentioned parameters it is possible to produce a mean thickness range below 10µm and, indeed, below 200nm and even down to 10nm or less.

Examples of glasses which may be used to produce such glass flake are ECR glass, C glass, E glass and LA glass.

In general, such glass flake is colourless or white. Attempts have been made to produce coloured flake but they have been unsuccessful. For instance, formulations were based on a standard C-glass (Table 1) but with the addition of colouring agents used in sheet glass such as iron oxide, copper oxide and graphite at high levels (> 5% by weight).

**Table 1 C-glass composition**

| **Oxide** | **Wt (%)** |
|---|---|
| **SiO₂** | < 63 |
| **Na₂O** | 8 |
| **Al₂O₃** | > 5 |
| **K₂O** | 8 |
| **CaO** | 14 |
| **MgO** | 5 |
| **B₂O₃** | > 5.9 |
| **Other** | < 1 |

Although the additives mentioned give strong colour to glass in thickness of circa 10 µm and above they merely serve to change, very slightly, the refractive index of the glass and produce a slight greying or change in brightness in flake below circa 2 µm even though in the thick sections of glass very strong colouring was observed to the extent that the glasses became opaque.

There is interest in producing coloured glass flakes that retain their colour and light scattering properties when produced at sub-micron thickness.

### Statements of the Invention

According to the present invention, there is provided glass flake having a thickness below 10µm and being coloured through the bulk of the material. The colour is not just on the surface of the material but extends throughout the flake.

Preferably, the glass flake is at least partially crystalline and/or includes one or more clusters. Clustering is a phenomenon occurring at or on an atomic scale and is discussed in Greaves, G.N and Sen, S. (2007) "Inorganic glasses glass-forming liquids and amorphizing solids", Advances in Physics, 56:1, 1-166.

Preferably, the flake comprises a nucleating agent and a colouring agent.

Preferably, the flake has a thickness below 5µm, more preferably below 2µm and, most preferably, below 1µm. By way of example, the flake may have a thickness in the range from 200 to 500nm. The flake preferably includes, as a nucleating agent, titanium dioxide and/or zinc oxide.

Other ingredients may include the oxides of sodium, potassium and calcium. The glass may have a low borate concentration.

The flake preferably includes a colouring agent present in an amount of at least 2% by weight. Typically, transition metals and rare earth metals may be used to create colour effects. Preferred colouring agents include copper oxide, cobalt oxide, ferric oxide, manganese dioxide, nickel oxide and cerium oxide.

The invention also provides a method of producing coloured glass flakes having a thickness below 10µm, the method comprising incorporating in the glass flakes a nucleating agent and a colouring agent and heating the flakes to change the extent and/or nature of their crystallisation.

### Detailed Description of the Invention

### Clustering and Crystal Growth

A glass is formed typically from oxides of silicon, boron, aluminium, titanium or phosphorous in combination with various cationic species which typically contain sodium potassium, calcium or other suitable species. The melt viscosity of glass is determined by the polymeric nature of the structure which exists. At very high temperatures, the species which exist will be clusters of atoms: SiOₓ, AlO_{y}, BO_{z}, etc.

As the melt is cooled, so the size and nature of the clusters will change and reflect the thermodynamic stability of the species which can be formed from the mixture. In the case of a brittle soda glass the SiOₓ, can form 3D polymeric structures and the extended order is often referred to as a crystalline structure. In a mixture of SiOₓ and AlO_{y}, compositions can be created where the Lewis acid - base nature of the components balance and a stable layer structure is created which comprises a sandwich of Si and Al oxides. The Al oxide is attached to a Si oxide and a completed structure is created at a dimension of approximately 1 nm thickness. This structure in its most ideal form is found in clay. If the balance between the Si and Al is not exactly matched then a more 3D structure is formed. The Al acts as a blocking agent for the formation of the 3D polymeric structure. Addition of certain oxides will act to nucleate crystal growth; titanium and zinc oxides have this effect. The nucleation mechanism is via the formation of stable mixed oxides which control and assist the formation of the regular order entities which are associated with crystal structure in glasses.

In order to achieve colour on a sub-micron scale, it has been postulated that a semi-crystalline glass (a glass-ceramic) will enhance the colour. The colour of glass arises from light that is either reflected or transmitted (scattered) by the glass. If larger particles are present in the glass, the intensity of the scattered radiation will be increased.

It is possible to devitrify the majority of glasses if a glass is heated for a sufficient length of time at a suitable temperature. By controlling the temperature and viscosity of a glass, different crystallographic compositions of material exhibiting identical chemical compositions can be achieved and this can produce some colouration as crystallisation occurs. Crystallisation involves two basic parameters: nucleation and growth. Titanium dioxide and zinc oxide are known nucleating agents and can work in at least two different ways:
1. *As catalysts of phase separation -* one amorphous phase is produced that is more easily crystallised than the bulk glass.
2. *As nucleating agents -* they promote the formation of nucleation sites within the glass in order to achieve controlled crystallisation. In the case of coloured glass, heterogeneous nucleation occurs, as the titanium and zinc oxides provide nuclei for the growth of transition metal oxides such as iron oxide to impart colour.

In essence there are a number of factors which will influence the nature of the "structure" which is dynamically formed in the melt and which will influence the properties of the quenched solid created in the flake. These factors are the presence of nucleating species, the presence of depolymerising species and the balance of cationic to anionic species.

Titanium, zinc and aluminium are all higher temperature oxides than silica and hence should thermodynamically be more stable than silica. Titanium and aluminium form basic oxides whereas silicon forms an acidic oxide. Thus, thermodynamically there will be a bias towards formation of aluminium - silica and titanium - silica primary structures. This bias is clearly illustrated in mineral chemistry where aluminosilicates form a major part of the structure of the earth.

As the melt is cooled clusters will be formed. The size and form of the clusters will be controlled by several factors:-
- The balance between the Lewis acidic (silica) and Lewis basic (alumina). If the system were charge neutral then these components would form an infinite amorphous matrix.
- The presence of oxides such as Na₂O, K₂O, CaO etc. will inhibit the formation of the Si-O-Si, Al-O-Al or Si-O-Al bonds creating X-O- terminations. If the temperature is high then the formation of the matrix will be determined by the temperature difference between that of the melt and that for the formation of the particular species. If the concentration of the positive charged species is high, then it will be possible to envisage that pseudo micelle type structures are formed. These micelles will coalesce to form an amorphous matrix as the glass is cooled. If the melt is rapidly quenched then it will be possible that these structures will be retained and will influence the physical properties which are created.
- The extent of the structure will be influenced by the presence of structure forming oxides such as zinc and titanium. These will nucleate the growth of the clusters in the melt.
- The presence of borate will limit the growth of the silica or alumina oxide structures, lowering the melting point and suppressing the growth of the clusters.

The composition of the glass will influence the nature of the structure formed. If colour is associated with electronic transitions of, for instance, cobalt, in the glass, then it is reasonable to assume that it will have to be in a charged state and that this state will be dictated by the charge balance in the system. Theory tells us that the colour centre will usually be associated with a coordinated structure around the pigment. If the cobalt can form a lower oxidation state then it will lose the coordination and its colour. The octahedral coordination will achieve the Russell Sanders splitting usually associated with the blue colour. The coordination will be dictated by the groups which are bound to the colour centre. It is reasonable to assume that the first coordination shell will be oxygen and that the second can contain silica, alumina or titanium. Which of these elements form the structure will be determined by which can form the most stable coordination shell. Silica will tend to form a tetrahedral whereas alumina will form an octahedral structure. Theory therefore suggests that for colour to be observed, it will be important that the colour centre is formed in the melt and retained during the quenching process. If the positive charge content is high then the cobalt will retain its high oxidation state. If, however, the positive charge content is low then there will be a tendency for the cobalt to be reduced to a colourless lower oxidation state.

### Examples

Examples of methods and formulations illustrating the invention will now be given.

A golden/brown coloured glass flake was produced on several occasions when the starter formulation was based on the LAG6 formulation (Table 2) of Glassflake Ltd but with the addition of a transition metal. When standard LAG6 glass flake is produced, it is white, irrespective of thickness. However, slight modifications of the formulation, namely the addition of colouring agents such as iron oxide, manganese oxide and bismuth oxide, produce slightly coloured glass flakes (UVRB series) the strongest of which, a golden/brown flake, was produced with the addition of bismuth and titanium dioxide. Phase separation and some crystallisation are exhibited in the UVRB glass series.

**Table 2 UVRB compositions based on LAG6 that fabricated golden flake**

| **Oxide** | **Weight (%)** | | | |
|---|---|---|---|---|
| | **LAG6** | **UVRB1** | **UVRB2** | **UVRB3** |
| **SiO₂** | 70.35 | 68.27 | 64.06 | 58.80 |
| **Na₂O** | 7.98 | 7.17 | 6.95 | 8.76 |
| **Al₂O₃** | 3.15 | 3.22 | 3.57 | 3.79 |
| **K₂O** | 1.93 | 1.76 | 1.75 | 1.91 |
| **CaO** | 1.84 | 1.87 | 0.91 | 3.87 |
| **MgO** | 1.30 | 1.24 | 0.55 | 1.00 |
| **B₂O₃** | 11.87 | 10.58 | 7.68 | 7.56 |
| **Fe₂O₃** | 0.08 | 3.11 | 4.04 | 3.99 |
| **Bi₂O₃** | | 1.33 | 2.00 | 1.96 |
| **MnO₂** | | | 6.35 | 6.27 |
| **TiO₂** | 1.51 | 1.33 | 2.01 | 1.96 |
| **ZnO** | | 0.11 | 0.13 | 0.13 |
| **Flake thickness (um**) | 1 | - | 0.4-1.8 | 0.57-2.41 |

In contrast, formulations based on ECR glass flake did not produce coloured glass flake at all (Table 3). The glass flake was white.

**Table 3 UVRA compositions based on ECR that produced white flake**

| **Oxide** | **Weight (%)** | | | |
|---|---|---|---|---|
| | **ECR** | **UVRA1** | **UVRA2** | **UVRA3** |
| **SiO₂** | 64.62 | 66.49 | 62.92 | 66.49 |
| **Na₂O** | 11.15 | 10.71 | 11.98 | 10.71 |
| **Al₂O₃** | 4.87 | 4.72 | 4.75 | 4.72 |
| **K₂O** | 2.24 | 2.29 | 2.31 | 2.29 |
| **CaO** | 6.00 | 6.15 | 6.82 | 6.15 |
| **MgO** | 2.30 | 2.36 | 2.38 | 2.36 |
| **B₂O₃** | 5.16 | 3.78 | 4.36 | 3.78 |
| **Fe₂O₃** | 0.08 | 0.36 | 0.35 | 0.36 |
| **Bi₂O₃** | | 0.06 | 0.00 | 0.06 |
| **TiO₂** | 0.30 | | 1.03 | |
| **ZnO** | 3.28 | 3.08 | 3.10 | 3.08 |
| **Flake thickness (um)** | 1.0 | 0.8 | 0.32-0.5 | 0.3-0.5 |

Powder X-ray diffraction was performed on standard ECR glass flake and UVRB2 glassflake after grinding the flake to fine powders. Results show that ECR glass flake is completely amorphous, whilst UVRB2 glass flake is partially amorphous and partially crystalline. This suggested that the crystallinity of UVRB2 is the significant factor in the colouring of the flake.

Titanium dioxide is an intermediate oxide, and can act as both an acid and a base. Therefore it can destabilise a single-phase glass due to co-ordination effects. Phase separation can arise due to differences in charge between principal network forming ions. Based on results from the UVRA and UVRB series it is possible to form the following conclusions:
- Thickness of flake is irrelevant in production of the golden/brown flake. The thickness varies from 300 nm to 2 microns, and still remains coloured.
- Nucleating agents (TiO₂ and ZnO) are present in both types of glass. It is likely that the presence of titanium dioxide in the UVRB series has catalysed the phase separation exhibited. The phase separation is minor, and therefore it is probable that the titanium dioxide is also behaving as a nucleating agent to crystallisation. The colouring agents in these glasses are present in sufficient quantities to grow crystals on the titanium dioxide nucleation sites formed. This contrasts to the UVRA series, where the colouring agents are present in insufficient quantities to be able to produce a coloured flake at a sub-micron scale, even though the flake may be partially crystalline due to the presence of nucleating agents.
- To achieve coloured glass flake, a combination of nucleating agents and sufficient quantities of colouring agents must be present, because they work together, in synergy. Golden/brown flake was produced to some extent in all UVRB formulations despite the different colouring agents used. Therefore the oxidation state of the transition metal oxides must be controlled in order to produce different colours.

To confirm the above theory that colour arises on the sub-micron scale in glass flake due to both nucleating agents and colouring agents being present in sufficient quantities, more glasses were produced and flaked. Difficulties in melting LAG6 type batches meant that ECR formulations were used. The nucleating agents (TiO₂ and ZnO) enable the glass network to atomically rearrange and create long range orders, essential for crystallisation. Colouring agents were added in sufficient (greater) amounts to grow crystals upon the nuclei. As a consequence coloured flakes were produced using the ECR formulation as a starter. Glass flakes containing copper are pale blue in colour, whilst cobalt containing glassflakes are intense blue.
See (Table 4).

**Table 4 Formulation (based on ECR) to produce intensely coloured blue glassflake at sub-micron thickness**

| **Oxide** | **Wt (%)** |
|---|---|
| **SiO₂** | 61.97 |
| **Na₂O** | 11.08 |
| **Al₂O₃** | 4.67 |
| **K₂O** | 2.15 |
| **CaO** | 5.79 |
| **MgO** | 2.20 |
| **B₂O₃** | 5.22 |
| **Fe₂O₃** | 0.07 |
| **TiO₂** | 0.34 |
| **CoO** | 2.15 |
| **ZnO** | 4.35 |
| | **100.00** |

This formulation has produced glass flake that has thickness ranging from 500-200nm. It is still intensely coloured at the lower thickness. The formulation differs from the UVRA series in that it has higher levels of the colouring agent. It differs from the UVRB series as it has lower levels of TiO₂ and higher levels of ZnO, but is similar as it has high levels of colouring agent. Therefore, it is possible to conclude that **either** TiO₂ or ZnO can be used as a nucleating agent, as long as the colouring agent is present in amounts larger than ∼ 2%. It is advantageous to use ZnO instead of TiO₂, as large amounts of TiO₂ increase the viscosity of the molten glass and melt temperature, and further contribute to phase separation.

Although two very different glasses have been used to produce a sub micron coloured glass, others may be used so long as the colouring and nucleating agents are present in appropriate quantities. Further there are some minerals such as basalt that already have the correct balance of elements to produce colour as a starter material and only need small additions of the correct colouring agents to produce a coloured glass/ceramic at sub-micron level.

### Conclusions

Previous attempt had failed to produce coloured glass flake at low and submicron levels. The lack of nucleating agents in the formulation explains why colour was not seen on these experiments.

Golden glass flake was produced when TiO₂ was present (∼2%) and colouring agents were present (at least 3% of one colouring agent). However, white glass flakes were produced when nucleating agents were present but colouring agents were only present at low levels (<0.4%). From this, it was possible to conclude that both nucleating and colouring agents are required to produce coloured flake.

From research conducted, and glass flakes produced, it is possible to manufacture pale blue flake using copper oxide, and intensely coloured flake (at sub-micron thickness) using zinc oxide as the main nucleating agent (titanium dioxide is present in small quantities) and cobalt oxide as the colouring agent. Increasing the level of cobalt oxide produces darker coloured glassflakes.

The ECR formulation can be taken and modified (as in Table 4) to produce a range of coloured glassflakes. It is important to control the reaction conditions and oxidation states of the transition metal oxides in order to obtain the desired colours.

Table 5 shows the possible combinations to give a range of colours when using the correct levels in ECR glass containing sufficient zinc oxide or titanium oxide as nucleating agents.

**Table.5 Colouring agents to be used in formulation containing nucleating agents to produce coloured glass flakes**

| **Colour of glass** | **Colouring agent required** |
|---|---|
| Blue | CoO + CuO |
| Blue green | Fe₂0₃ + CoO |
| Black | Fe₂O₃+MnO₂+NiO+CoO+CuO in oxidising conditions |
| Copper ruby | Cu₂O in reducing conditions |
| Rose violet | MnO₂+CoO in oxidising conditions |
| Canary yellow | TiO₂+CeO₂ |
| Green | FeO in oxidising conditions |
| Green-blue | FeO in oxidising conditions |

## Claims

1. Glass flake having a thickness below 10µm and being coloured through the bulk of the material, the flake comprising both a nucleating agent and a colouring agent; wherein the flake comprises a colouring agent selected from one or more of copper oxide, cobalt oxide, ferric oxide, manganese dioxide, nickel oxide and cerium oxide and wherein the glass flake is at least partially crystalline and/or includes one or more clusters.

2. Glass flake according to any of the preceding claims, wherein the flake has a thickness below 5µm.

3. Glass flake according to Claim 2, wherein the flake has a thickness below 2µm.

4. Glass flake according to Claim 2 or Claim 3 wherein the flake has a thickness below 1µm.

5. Glass flake according to any of Claims 2 to 4, wherein the flake has a thickness of from 200 to 500nm.

6. Glass flake according to any of the preceding claims, wherein the flake comprises titanium dioxide and/or zinc oxide.

7. Glass flake according to any of the preceding claims, wherein the flake comprises a colouring agent present in an amount of at least 2% by weight.

8. A method of producing coloured glass flakes having a thickness below 10µm, the method comprising incorporating in the glass flakes a nucleating agent and a colouring agent and heating the flakes to change the extent and/or nature of their crystallisation; wherein the a colouring agent is selected from one or more of copper oxide, cobalt oxide, ferric oxide, manganese dioxide, nickel oxide and cerium oxide.

## Patentansprüche

1. Ein Glasflake mit einer Dicke unter 10 µm und die durchgehend im Großteil des Materials gefärbt ist, wobei das Flake sowohl einen Keimbildner als auch einen Farbstoff umfasst; wobei das Flake einen Farbstoff umfasst, ausgewählt aus der Gruppe bestehend aus einem oder mehreren von Kupferoxid, Kobaltoxid, Eisenoxid, Mangandioxid, Nickeloxid und Ceroxid und wobei das Glasflake mindestens teilweise kristallin ist und/oder einen oder mehrere Cluster umfasst.

2. Das Glasflake nach einem der vorhergehenden Ansprüche, wobei das Flake eine Dicke unter 5 µm aufweist.

3. Das Glasflake nach Anspruch 2, wobei das Flake eine Dicke unter 2 µm aufweist.

4. Das Glasflake nach Anspruch 2 oder Anspruch 3, wobei das Flake eine Dicke unter 1 µm aufweist.

5. Das Glasflake nach einem der Ansprüche 2 bis 4, wobei das Flake eine Dicke von 200 bis 500 µm aufweist.

6. Das Glasflake nach einem der vorhergehenden Ansprüche, wobei das Flake Titandioxid und/oder Zinkoxid umfasst.

7. Das Glasflake nach einem der vorhergehenden Ansprüche, wobei das Flake einen Farbstoff umfasst, der in einer Menge von mindestens 2 Gew.-% vorliegt.

8. Ein Verfahren zur Herstellung gefärbter Glasflakes mit einer Dicke unter 10 µm, wobei das Verfahren das Einarbeiten eines Keimbildners und eines Farbstoffs in die Glasflakes und das Erhitzen der Flakes umfasst, um den Umfang und/oder die Art ihrer Kristallisation zu verändern, wobei der Farbstoff ausgewählt ist aus einem oder mehreren von Kupferoxid, Kobaltoxid, Eisenoxid, Mangandioxid, Nickeloxid und Ceroxid.

## Revendications

1. Flocon de verre ayant une épaisseur au-dessous de 10 µm et étant coloré à travers la masse de la matière, le flocon comprenant à la fois un agent de nucléation et un agent de coloration, le flocon comprenant un agent de coloration choisi parmi un ou plusieurs de l'oxyde de cuivre, l'oxyde de cobalt, l'oxyde ferrique, le dioxyde de manganèse, l'oxyde de nickel et l'oxyde de cérium, et le flocon de verre étant au moins partiellement cristallin et/ou comprenant un ou plusieurs agrégats.

2. Flocon de verre selon la revendication précédente, dans lequel le flocon a une épaisseur au-dessous de 5 µm.

3. Flocon de verre selon la revendication 2, dans lequel le flocon a une épaisseur au-dessous de 2 µm.

4. Flocon de verre selon la revendication 2 ou la revendication 3, dans lequel le flocon a une épaisseur au-dessous de 1 µm.

5. Flocon de verre selon l'une quelconque des revendications 2 à 4, dans lequel le flocon a une épaisseur de 200 à 500 nm.

6. Flocon de verre selon l'une quelconque des revendications précédentes, dans lequel le flocon comprend du dioxyde de titane et/ou de l'oxyde de zinc.

7. Flocon de verre selon l'une quelconque des revendications précédentes, dans lequel le flocon comprend un agent de coloration présent dans une quantité d'au moins 2 % en poids.

8. Procédé de production de flocons de verre colorés ayant une épaisseur au-dessous de 10µm, le procédé comprenant l'incorporation, dans les flocons de verre, d'un agent de nucléation et d'un agent de coloration et le chauffage des flocons pour changer le degré et/ou la nature de leur cristallisation, l'agent de coloration étant choisi parmi un ou plusieurs de l'oxyde de cuivre, l'oxyde de cobalt, l'oxyde ferrique, le dioxyde de manganèse, l'oxyde de nickel et l'oxyde de cérium.
